# EUROPEAN PATENT APPLICATION

(11) **EP 1 980 421 A1**
(43) Date of publication of application: **15.10.2008**
(21) Application number: 07106174.1
(22) Date of filing: 13.04.2007
(51) Int. Cl.: B60C 17/06, B60C 19/00

(54) **Insert for mounting into an inflatable tire**

(71) Applicant: SOLIDEAL HOLDING SA, 2086 Luxemburg (LU)
(72) Inventor: Priengiers, Koenraad, 5, Colombo (LK)
(74) Representative: Luys, Marie-José A.H.

(57) **Abstract**

An inflatable tire (5) comprising a tread portion (10) forming a running face (19) for the tire (5) along a circumference (20) of the tire (5) and a carcass (9) supporting the tread portion (10), the tread portion (10) and the carcass (9) extending around a central rotational axis (18) of the tire (5), the carcass (9) comprising circumferential sidewalls (12,22) extending from the circumferential sides (11,21) of the tread portion (10) towards the rotational axis (18) of the tire (5), the tread portion (10) and the carcass (9) at least partially delimiting an annular space (6) surrounding the rotational axis (18) and enclosing an inflatable volume (7) for receiving a filling material (8), the annular space (6) containing an insert (1) in view of decreasing the inflatable volume (7), characterised in that the assembly of the insert (1) and the tire (5) comprises positioning means (4) which permit positioning and at least temporarily fixing the position of the insert (1) into the annular space (6) of the tire (5).

## Description

The present invention relates to an inflatable tire as described in the preamble of the first claim.

The present invention also relates to an insert as part of an inflatable tire. The present invention further relates to a method for inflating an inflatable tire.

US2004/0154718 discloses an inflatable tire comprising an inflatable cavity delimited by a circumferential tread portion comprising a running face and two sidewalls extending from opposing sides along the circumference of the tread portion in a direction towards the rotational axis of the tire. The tire is mounted to a rim and the cavity of the tire is filled with a filling material, in particular, a polyurethane composition after which the polyurethane is cured. The cured polyurethane is used in applications where high safety standards have to be met and a tire running flat is unacceptable, for example when the tires support a scaffold. The inflatable tire disclosed in US2004/0154718 however has the disadvantage that in order to be fully inflated, the cavity of the inflatable tire has to be completely filled with the filling material for example polyurethane. In case polyurethane is used for filling the tire, the amount of polyurethane ads to the cost of filling the tire since polyurethane has a considerable price.

WO0214088 discloses that in order to avoid explosive decompression of an inflated tire when the tire is punctured, the tire is filled with a foamed elastomer filling. WO0214088 further describes that used foamed elastomer filling of tires can be cut up in chunks which are then placed into the casing of the tire after which unused elastomer filling is added as a filler material to fill any remaining voids. The inflatable tire resulting from the method disclosed in WO0214088, although reducing the amount of filling material however has the disadvantage that the provided homogeneity is insufficient.

There is thus a need for a tire which requires a reduced amount of filling material.

Accordingly it is the object of the invention to provide an inflatable tire in which the amount of material needed to fill the tire may be reduced.

This is achieved according to the present invention with a tire showing the technical features of the characterising portion of the first claim.

Thereto, the assembly of the insert and the tire comprises positioning means which permit positioning and at least temporarily fixing the position of the insert into the annular space of the tire.

In the context of this application, with filling material is meant, every material that can be used to fill a tire and that is in a condensed state, i.e. solid or liquid, when the tire is in use so that the risk of a sudden leave of filling material from the tire is minimal and maximum safety of the tire is guaranteed. Preferred filling materials are liquid upon filling of the tire, but are solid during use of the tire. Possible filling materials include any flexible polymer such as for example polyurethane, flexible plastic foam or flexible rubber foam, etc. The filling material can be mixed with a second material such as rubber granulate, polyurethane granulate, sawdust, CaCO₃, soft mineral material, etc. The second material preferably has a hardness which does not differ too much from the hardness of the filling material and/or has a very fine structure such as for example a powder.

Due to the presence of the insert in the inflatable volume of the tire, the inflatable volume and thus the amount of filling material needed to fully inflate the tire are reduced by the volume of the insert. This is particularly important when polyurethane is used as filling material, as it is rather expensive.

The inflatable tire of this invention presents the advantage that the material of the insert, the filling material and the tire can be chosen independently of each other. This permits selecting the material for each of these individual parts in function of the envisaged properties of the tire such as the physical characteristics to be provided by the inflated tire, for example support to be provided by the tire, elasticity, load bearing capacities and deformation of the tire during use, desired characteristics of the tire in relation to stability of the vehicle to be supported by the tires in various circumstances of use (lower and higher velocities, grip, road-holding, etc), etc.

The presence of the positioning means facilitates positioning of the insert in the inner annular space of the tire in an envisaged position and maintaining the insert at least temporarily in that position. The presence of the positioning means allows achieving a more correct positioning of the insert into the annular space and maintaining the position of the insert in the inner annular space while filling material is injected and, if necessary depending on the characteristics of the filling material, during curing of the filling material.

The positioning means are preferably designed such that they maintain the insert at a predetermined distance from the inner face of the tire. This way the contact area between the insert and the inner face of the inflated tire is minimised, and the operational reliability of the tire is improved since friction between tire and insert is minimised.

In a preferred embodiment, the positioning means comprise a plurality of protrusions extending from an outer face of the insert facing an inner face of the circumferential sidewalls and/or the tread portion towards at least one of the first circumferential sidewall, the second circumferential sidewall or the tread portion, the protrusions being provided to contact at least one of an inner face of the first or the second circumferential side wall or the tread portion of the uninflated tire. Although the protrusions contact the inner face of the uninflated tire annular space, the contact surface area is negligible as compared to the surface area of the insert.

In a further preferred embodiment, the protrusions comprise an extension at their respective end parts facing the inner face of the tire, the extensions having a smaller width as compared to the protrusions, in view of minimising the contact surface area between the protrusion and the inner face of the uninflated tire. This way friction between insert and the inflated tire is minimised. The smaller width of the extensions also allows some compression of the extensions which facilitates mounting of the insert into the annular space of the uninflated tire and assists in more or less clamping the insert into the annular space and achieving a better and more accurate positioning of the insert into the annular space of the uninflated tire. The remaining wider part of the protrusion offers a reliable base for the extensions, as a base for a precise positioning of the insert into the annular space of the uninflated tire. The extensions can be made of a material with the same compressibility as the remainder of the protrusions. Preferably however, the extensions are made of a material with a higher compressibility and the remainder of the protrusions are made of a material that is less compressible, without going at the expense of easy mounting and reliable positioning of the insert.

The inventor has found that the insert preferably is annularly shaped to provide optimum fit and easy mounting of the insert into the annular space of the inflatable tire. The annular shape of the insert also provides the inflatable tire with more homogeneous physical characteristics. Any load originating from a load carried by the vehicle resting on the tires as well as any load caused by the filling material is transferred to the insert. With an annularly shaped insert a homogeneous distribution of the load over the insert is obtained decreasing the wear and tear of the tire and the insert, thereby improving the operational reliability and the lifespan of the insert and the tire.

The insert preferably comprises any one of the following materials: deformable, solid and/or foamed plastic material, elastomer, rubber, polypropylene, EPDM rubber, polyethylene. In addition thereto at least one additive such as for example rubber granulate, polyurethane granulate, sawdust, CaCO₃, soft mineral material, etc can be mixed with the above mentioned materials. The additive preferably has a hardness which does not differ too much from the hardness of the remainder of the material of which the insert is made and/or has a small particle size and is for example a powder. The hardness of the insert preferably does not differ too much from the hardness of the filling material. The insert however can be made of any material known to the person skilled in the art which provides the tire in which the insert is mounted with the desired physical characteristics. The insert therefore no longer depends of the availability of chunks of used elastomer filling, since the mentioned materials are readily commercially available.

The presence of an insert with a rounded outer face reduces the risk to building of stress and concentrations of stress at edges and/or corners reducing the risk to tearing. The rounded face of the insert also provides the homogeneity of the physical characteristics of the tire.

Other details and advantages of the device according to the invention will become apparent from the enclosed figures and description of preferred embodiments of the invention.

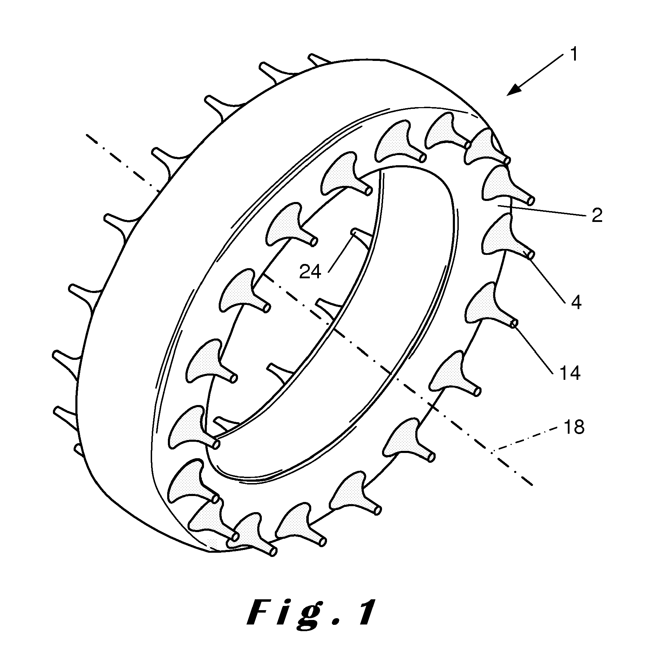

Figure 1 shows an overview of an insert according to the invention.
Figure 2a shows a top view of the insert of figure 1.
Figure 2b shows a cross-section of a side view of the insert of figure 1.
Figure 3 shows a cross-section of a tire comprising the insert of figure 1.
Figure 4 shows a cross-section of a tire comprising a different embodiment of the insert of figure 1.

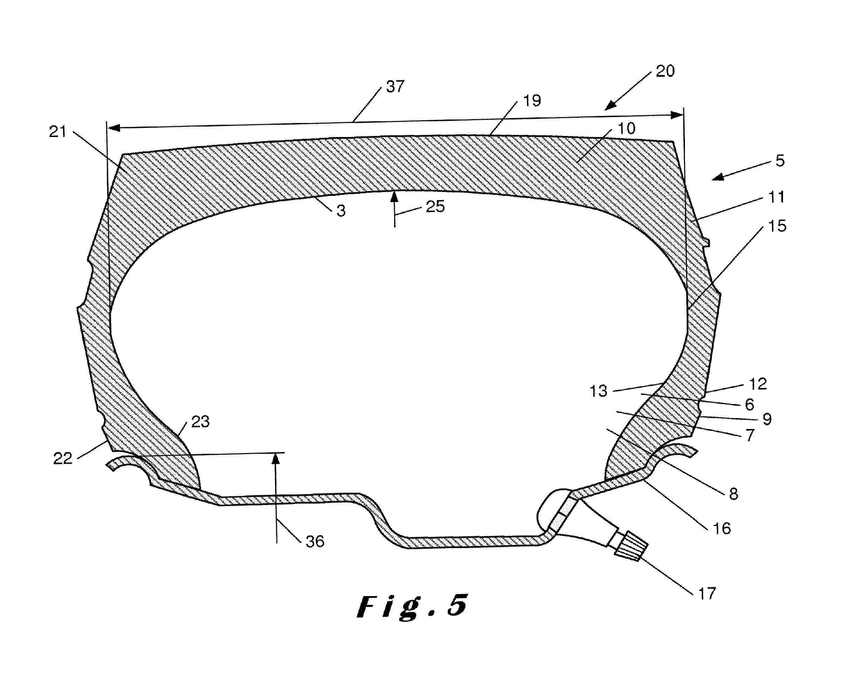

Figure 5 shows the cross-section of the tire of figure 4 without the insert.

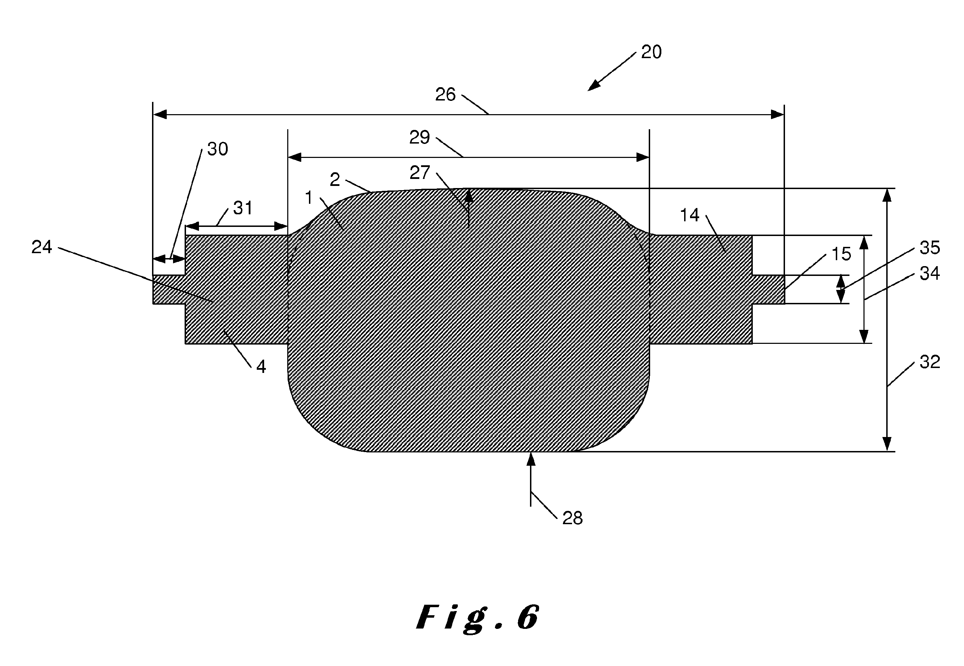

Figure 6 shows the cross-section of the insert of figure 4 without the tire.

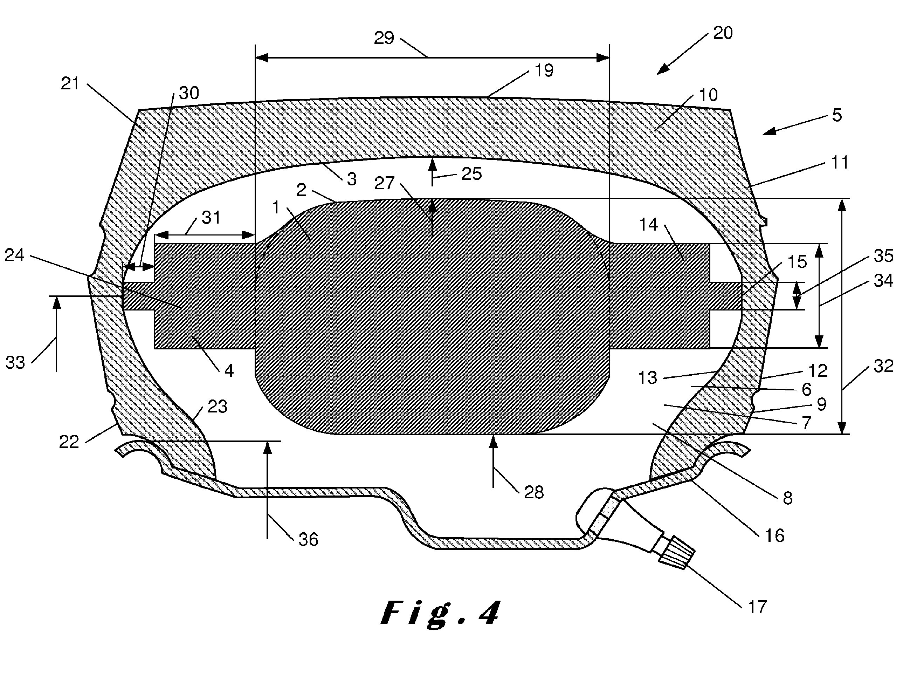

The preferred embodiment of the inflatable tire 5 shown in figure 4 comprises a tread portion 10 forming a running face 19 for the tire 5 along a circumference 20 of the tire 5. The tire 5 also comprises a carcass 9 supporting the tread portion 10. The tread portion 10 and the carcass 9 extend around a central rotational axis 18 of the tire 5. The carcass 9 comprises a first circumferential sidewall 12 which extends from a first side 11 of the tread portion 10 towards the rotational axis 18 of the tire 5 and a second circumferential sidewall 22 extending away from a second side 21 of the tread portion 10 towards the rotational axis 18 of the tire 5. The first 11 and the second 21 side extend along opposing circumferential sides of the tread portion 10. The tread portion 10 and the carcass 9 at least partially delimit an annular space 6 of the tire 5 surrounding the rotational axis 18 and comprise an inflatable volume 7 for receiving a filling material 8. The annular space 6 is further delimited when the tire 5 is mounted to a rim 16 by the outer circumferential side of the rim 16.

Within the scope of the invention it is preferred to minimise the contact surface area between the insert 1 and the inner face 3, 13, 23 of the tread portion 10 and the first 12 and the second 22 side wall of the tire 5 to minimise friction between the insert 1 and the tire. By reducing the friction, the wear and tear working on the insert 1 and the tire 5 can be reduced, which improves operational reliability and lifespan of the insert 1 and the tire 5.

The dimensions, form and/or shape of the insert 1 preferably are adapted to the dimensions, form and/or shape of the annular space 6 of the tire 5 defined by the inner face 3 of the tread portion 10, the inner face 13 of the first sidewall 12 and the inner face 23 of the second side wall 22 and, since a rim 16 is mounted to the tire 5 which then further delimits the annular space 6, by the outer circumferential side of the rim 16. The dimensions, form and/or shape of the insert 1 may even be adapted to the dimensions, form and/or shape of the annular space 6 of the uninflated tire 5. When filling the annular space, an outward force is exerted by the filling material, pushing the sidewalls 21, 22 and/or tread portion outwardly of the tire. Thereby, the contact between the insert 1 and the tire 5 will usually disappear and friction between insert 1 and tire 5 is eliminated. The volume of the inflatable volume 7 is preferably reduced as much as possible by making the insert 1 as large as possible. Table 1 shows, by way of example, some parameters characterising the annular space 6 of the tire 5 in relation to parameters characterising the dimensions, form and/or shape of the insert 1.

The insert 1 may be made of any composition comprising any one of the following materials: rubber, plastic, elastomer, elastic and/or deformable material material but preferably comprise any one of the following: deformable, solid and/or foamed plastic material, rubber, polypropylene, EPDM rubber, polyethylene, elastomer. In addition thereto one or more additives comprising rubber granulate, polyurethane granulate, sawdust, CaCO₃, soft mineral material, etc. can be mixed with the above mentioned materials in the composition of the insert 1. The additive preferably has a hardness which does not differ too much from the hardness of the material of which the remainder of the insert 1 is made and/or has a fine particle size such as for example a powder. The composition of the insert 1 preferably has a hardness which does not differ to much from the hardness of the filling material 8.

The insert 1 according to the invention is mounted into the tire 5 into the annular space 6 with the purpose of decreasing the inflatable volume 7. In a preferred embodiment of the invention the insert 1 is dimensioned so that the volume of the annular space 6 is reduced with 20 - 80 %, more preferably 30 - 70 % most preferably 40 - 60 %, as indicated in table 1.

The assembly of the insert 1 and the tire 5 is provided with positioning means 4. The positioning means 4 may either be provided on the insert 1, the inner face of the tire 5 or cooperating positioning means 4 may be provided on both of them. Preferably the positioning means 4 are provided on the insert 1 with the aim of permitting a precise positioning of the insert in a predetermined position in the annular space and at least temporarily maintaining that position of the insert 1. The positioning means 4 counteract shifting of the insert 1 in the annular space 6 when filling the inflatable volume 7 with filling material 8. The positioning means 4 can for example also be provided on the inner faces 3, 13, 23 of the annular space 6 facing the insert, or may be present on both the insert 1 and the inner faces 3, 13, 23 of the annular space 6. The positioning means 4 can be permanently provided on the insert 1 or the inner faces 3, 13, 23 of its annular space 6 or can for example be removably mounted thereto and be removed after having inflated the tire 5. The positioning means 4 can be made of any material considered suitable by the person skilled in the art. The positioning means 4 may for example take the shape of means for fastening the insert 1 into the annular space 6 of the tire 5 which are made of metal, plastic, wooden or rubber and which extend from one ore more of the inner faces 3, 13, 23 of the annular space 6 towards the insert 1. The positioning means 4 may for example be metal elements which extend from at least one inner face 3, 13, 23 towards the insert 1. The metal elements may for example be pierced through or into the material of tire 5 and into the insert 1 before the tire is inflated with filling material 8. The metal elements can for example be removed after the tire 5 is filled with filling material 8.

In a preferred embodiment of the invention the positioning means 4 comprise a plurality of protrusions 14, 24 which extend from an outer face 2 of the insert 1 towards at least one in inner face 3, 13, 23 of at least one of the first or second circumferential sidewall 12, 22 or the thread portion 10. The dimensions of the protrusions 14, 24 are chosen such that an end part of the protrusions 14, 24 contacts the inner face 3, 13, 23 of at least one of the first circumferential sidewall 12, the second circumferential sidewall 22 and/or the thread portion 10 of the uninflated tire 5 with the purpose of clamping the insert 1 into the annular space 6 in a desired position and maintaining that position. The use of protrusions minimises the contact area between the insert 1 and the inner face 3, 13, 23 of the uninflated tire 5.

Although the protrusions 14, 24 may be removably mounted, they may be made in one piece with the tire 5, but preferably they are permanently attached to or made in one piece with the remainder of the insert 1. In the latter case the protrusions 14, 24 may be provided to the insert 1 in any way known to the person skilled in the art such as gluing, stapling, nailing, screwing, etc. As the protrusions 14, 24 are preferably made in one piece with the rest of the insert 1, the protrusions 14, 24 and the remainder of the insert 1 are preferably made of the same material. The nature of the material of the protrusions 14, 24 is however not critical for the invention and may be determined by the person skilled in the art. The protrusions 14, 24 may take any suitable shape and may for example be spherical, ellipsoid, rectangular, pyramidal, conic, cylindrical, hair-like, etc. The shape and form of the protrusions 14, 24 can be chosen by the person skilled in the art keeping in mind that the contact between the protrusions 14, 24 and the inner face 3, 13, 23 of the annular space 6 is preferably kept to a minimum. The number of protrusions 14, 24 is not critical for the invention and can be determined by the person skilled in the art.

Each protrusion preferably comprises a base which is connected to the insert and an end part which contacts the inner faces 3, 13, 23 of the annular space 6. The end parts preferably are elastic with the purpose of clamping the insert 1 into the annular space 6. To achieve this, the protrusions and end parts may be made of different materials.

Although the protrusions 14, 24 can be reinforced by adapting their geometrical cross-section such as for example by increasing the width 34 of the protrusions, part of the protrusions 14, 24, or all, can comprise a reinforcing member extending in height direction of the protrusions 14, 24 rendering the protrusions 14, 24 more rigid and more resistant to compression in height direction of the protrusion 14, 24. The reinforcing member preferably is at least partially embedded in the protrusion 14, 24 and preferably is made of rigid plastic or metal.

The protrusions 14, 24 preferably comprise an extension 15 at an end part of the protrusions 14, 24 which contacts the inner face 3, 13, 23 of the annular space 6. The width of the extensions 15 preferably is smaller than the width of the protrusion 14, 24 to minimise the contact surface area between the protrusion 14, 24 and the inner face 3, 13, 23 of the first circumferential sidewall 12, the second circumferential sidewall 22 or the tread portion 10 and decreases the wear and tear of the insert 1 and the tire 5 while providing the insert 1 with a self-supporting positioning into the annular space 6. The extensions 15 preferably are cylindrical having a width 35 and a height 30 but can have any other form and/or shape deemed appropriate by the person skilled in the art such as tapered towards an end part of the protrusion 14, 24 and/or cubic, ellipsoid, spherical, rectangular, etc.

The extensions 15 preferably are compressible in height direction of the protrusion 14, 24 so that the extensions 15 may be compressed when the insert 1 is positioned in the annular space 6. The compression of the extensions 15 results in a clamping of the insert 1 into the annular space 6 and in a more precise and stable positioning maintaining a minimum contact between the insert 1 and the inner face 3, 13, 23 of the tire 5.

The protrusions 14, 24 preferably extend virtually perpendicular with respect to the outer face 2 of the insert 1 as this permits an optimum positioning of the insert 1 into the annular space 6. The angle under which the protrusions extend from the outer face 2 of the insert is however not critical for the invention and can for example vary from 0° - 90°, preferably from 45° - 90°. The protrusions 14, 24 preferably contact the inner face 3, 13, 23 of the tire substantially perpendicular as this provides optimum suspension of the insert 1 into the annular space 6 while minimising the contact area between the protrusions 14, 24 and the inner faces 3, 13, 23 of the tire.

The protrusions 14, 24 preferably are all positioned on the same distance 33 from the rotational axis 18 of the tire 5 but this is not critical for the invention and the position of the protrusions 14, 24 can for example periodically change depending on the desired characteristics of the insert 1. The dimensions of the protrusions 14, 24, such as width 34 and height 31, depend mainly on the dimensions of the annular space 6, the dimensions of the insert 1, the shape of the insert 1, the shape of the tire 5, etc. Preferred total widths 26, comprising the heights 30, 31 of the extensions 15 and the protrusions 14, 24 and the side width 29 of the insert 1, in relation to the inside section width 37 of the uninflated tire 5 are shown in table 1.

To achieve homogeneous support of the insert 1, the protrusions 14, 24 preferably are regularly distributed over the surface of the insert 1 or the inner face 3, 13, 23 of the tire. The protrusions 14, 24 preferably are regularly distributed in circumferential and/or cross sectional direction of the outer face 2 of the insert 1 to provide uniform support of the insert and maintaining the envisaged position in the annular space 6. Along the cross-section for example one, two, three, four, five, six, seven, eight, nine, ten, etc. protrusions 14, 24 may be provided. The protrusions 14 extending towards the inner face 13 of the first sidewall 12 and the position of the protrusions 24 extending towards the inner face 23 of the second sidewall 22 are preferably positioned symmetrical with respect to each other, they may be alternating individually and/or in one or more rows over the surface at regular intervals or not, positioned staggered, etc.

The protrusions 14, 24 preferably extend from the insert 1 towards and contact the inner face 13, 23 of the first 12 and the second 22 circumferential sidewalls. This is however not critical for the invention and the protrusions may extend towards any other part of the inner face of the tire 5 such as for example the inner face 3 of the tread portion 10 or for example the outer face 2 of the rim 16.

The insert 1 preferably is annularly shaped and made of one piece and extends along the entire circumference of the inner face of the tread portion 3. The annularly shaped insert 1 improves the homogeneity of the composition of the inner volume of the tire 5 and thus improves the homogeneity of the physical characteristics provided by the tire 5. Although the circular shape of the insert 1 is preferred, the insert 1 can have any other shape and form deemed appropriate by the person skilled in the art such as square, rectangular, ellipsoid, triangular, undulating, curly, angled, etc. The insert 1 can however also be formed of a longitudinally shaped member with two end parts in longitudinal direction of the member, which is bent into the annular space 6 of the tire 5 in such a way that the two end parts contact each other. Thereby the end parts preferably have a complementary, engaging surface to permit forming an annular insert. The insert 1 may however also be made of several adjacent parts. The insert 1 can for example comprise blocks which extend along a third, quart, fifth, sixth, seventh, eight, etc. of the circumference of the inner face 3 of the tread portion 10. Also in this case the adjacent end parts preferably have complementary engaging surfaces and can for example be provided with means for temporarily or permanently fastening the two end parts to each other. The use of a continuous annular insert 1 has the advantage that the load working on the insert 1 is more homogeneously divided over the insert 1, whereas the insert 1 made of the bent member or the insert 1 comprising several parts can be more easily positioned into the annular space 6 of the tire 5.

Although it is preferred that the insert 1 extends along the entire circumference of the inner faces 3, 13, 23 of the tire 5, the insert 1 can also extend along part of the circumference of the inner face 3 of the tread portion 10 of the tire 5.

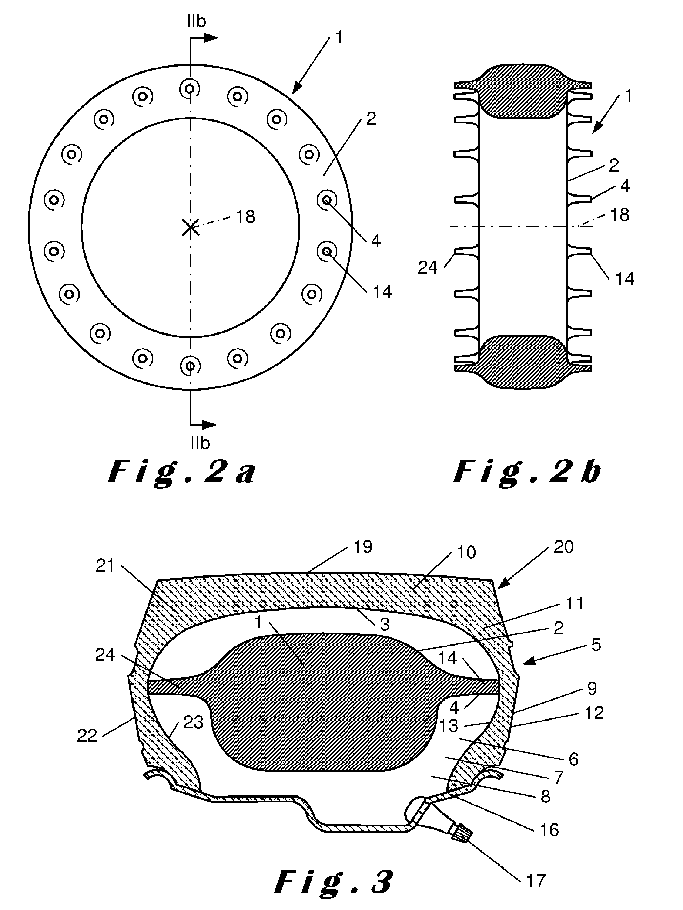

The shape and/or dimensions of the cross-section of the insert 1 preferably remain constant along the circumference of the insert 1. The cross-section of the insert 1, of which an example is shown in figure 2, can have any shape deemed appropriate by the person skilled in the art such as square, ellipsoid, circular, rectangular, triangular, kite-shaped or any other polygon deemed appropriate by the person skilled in the art. The cross-section of the insert 1 may for example be rectangular or square with rounded corners and a side width 29 and a height 32 as shown in figure 4. The insert 1 preferably is rotational symmetrical with respect to the rotational axis 18 of the insert 1.

The outer surface of the insert 1 preferably is flat and/or smooth but can have any form and/or shape deemed appropriate by the person skilled in the art such as for example oscillating, ribbed, continuously curved, discontinuously oscillating, step-wise, etc.

Table 1 shows some preferred relations between the inner diameter 28 of the insert 1 and the outer diameter 36 of the rim 16 and between the outer diameter 27 of the insert 1 and the diameter 25 of the inner face 3.

The following table shows the preferred parameters of the insert 1 in relation to the parameters of the tire 5.

**Table 1**

| | Preferred | More preferred | Most preferred |
|---|---|---|---|
| Outer diameter 27 insert 1 / diameter 25 of the inner face 3 of the uninflated tire 5 | 80%-103% | 95%-103% | 100.8% |
| Volume insert 1 / inflatable volume 7 | 20%-80% | 30%-70% | 40%-60% |
| Inner diameter 28 insert 1 / outside diameter 36 of rim 16 | 95%-150% | 100%-120% | 100% |
| Total width 26 insert 1 / inside section width 37 uninflated tire 5 | 90%-110% | 96%-104% | 100% |

The insert 1 can be mounted into the annular space 6 of the tire 5 in any way known to the person skilled in the art. When the insert 1 is for example made of several individual pieces, the different pieces of the insert 1 can be mounted into the annular space 6 by putting them at their desired individual locations, assisted by the positioning means 4, before the rim 16 is installed to the tire 5. When the insert 1 is made in one piece, the insert 1 is mounted into annular space 6 assisted by the positioning means 4 after which, preferably, the rim 16 is mounted to the tire 5.

Mounting of the annular shaped insert 1 into the tire 5 can be done by pushing together two sides of the annular insert 1, temporarily creating an oblong shaped insert 1 which can be mounted into the annular space 6. The oblong shape of the insert 1 can be created by pulling the insert 1 through a tube along a diametrical direction. The tube preferably has a diameter which is comparable to, preferably smaller than, the outer diameter of the rim 16. The tube is strong enough to withstand the forces exerted by the two diametrically pushed together sides of the annular insert 1, creating the temporarily oblongly formed insert 1. After the insert 1 has been mounted into the annular space 6 of the tire 5, the rim 16 is mounted to the tire 5 and the annular space 6 is filled with filling material 8, for example through the valve 17. The filling of the annular space 6 with filling material 8 can be done as deemed appropriate by the person skilled in the art and is not critical for the invention. US2004/0154718 for example discloses a method for filling a tire 5 with filling material 8, however other methods known to the person skilled in the art are possible.

Preferably use is made of a filling material which may be injected in the liquid state and which is hardened or cured later on. After the tire 5 has been filled with filling material 8, the filling material 8 possibly has to cure, for example when polyurethane is used. The tire 5 can be positioned in any position deemed appropriate by the person skilled in the art, but preferably is positioned with its rotational axis directed upwards. This is particularly appropriate in case the protrusions 14, 24 extend towards the first 12 and/or second 22 circumferential side wall of the tire 5, as the position of the insert 1 after inflating the tire 5 will not be influenced by gravity and the insert 1 will maintain its desired position into the annular space 6 during and/or after curing.

## Claims

1. An inflatable tire (5) comprising a tread portion (10) forming a running face (19) for the tire (5) along a circumference (20) of the tire (5) and a carcass (9) supporting the tread portion (10), the tread portion (10) and the carcass (9) extending around a central rotational axis (18) of the tire (5), the carcass (9) comprising a first circumferential sidewall (12) extending from a first circumferential side (11) of the tread portion (10) towards the rotational axis (18) of the tire (5) and a second circumferential sidewall (22) extending from a second circumferential side (21) of the tread portion (10) opposite the first circumferential side towards the rotational axis (18) of the tire (5), the first and the second circumferential side (11,21) lying along opposing circumferential sides of the tread portion (10), the tread portion (10) and the carcass (9) at least partially delimiting an annular space (6) surrounding the rotational axis (18) and enclosing an inflatable volume (7) for receiving a filling material (8), the annular space (6) containing an insert (1) in view of decreasing the inflatable volume (7), **characterised in that** the assembly of the insert (1) and the tire (5) comprises positioning means (4) which permit positioning and at least temporarily fixing the position of the insert (1) into the annular space (6) of the tire (5).

2. An inflatable tire (5) according to claim 1, **characterised in that** the positioning means (4) comprise a plurality of protrusions (14, 24) extending from an outer face (2) of the insert (1) facing an inner face (3, 13, 23) of the circumferential sidewalls (12, 22) and/or the tread portion (10) towards at least one of the first circumferential sidewall (12), the second circumferential sidewall (22) or the tread portion (10), the protrusions (14, 24) being provided to contact at least one of an inner face (3, 13, 23) of the first (12) or the second (22) circumferential sidewall or the tread portion (10) of the uninflated tire.

3. An inflatable tire (5) according to claim 2, **characterised in that** the protrusions (14, 24) comprise an extension (15) having a smaller width than the protrusions (14, 24) at their respective end parts facing the inner face (3, 13, 23) of the tire (5) to minimise the contact surface area between the protrusion (14, 24) and the inner face (3, 13, 23) of the uninflated tire (5).

4. An inflatable tire (5) according to claim 2 or 3, **characterised in that** the protrusions (14, 24) are positioned on a radial or axial extending outer face (2) of the insert (1) and **in that** they extend in a radial or axial direction respectively.

5. An inflatable tire (5) according to any of claims 1 - 4, **characterised in that** the insert (1) is annularly shaped and **in that** the insert (1) comprises a rounded outer face (2).

6. An inflatable tire (5) according to any one of claims 1 - 5, **characterised in that** the insert (1) is made in one piece.

7. An inflatable tire (5) according to any one of claims 1 - 6, **characterised in that** the insert (1) is made of a material chosen from the group of: deformable, solid and/or foamed plastic material, elastomer, rubber, polypropene, EPDM rubber, polyethylene.

8. An inflatable tire (5) according to any one of claims 1 - 7, **characterised in that** the volume of the insert (1) is such that the volume of the annular space (6) is reduced with 20 - 80 %, preferably 30 - 70 %, more preferably 40 - 60 % as compared to the volume of the annular space (6).

9. An insert (1) as part of an inflatable tire (5) of any one of claims 1 - 8, **characterised in that** the insert (1) comprises positioning means (4) for positioning and at least temporarily fixing the position of the insert (1) into the annular space (6) of the tire (5).

10. An insert (1) according to claim 9, **characterised in that** the positioning means (4) comprise a plurality of protrusions (14, 24) extending from an outer face (2) of the insert (1) facing an inner face (3, 13, 23) of the circumferential sidewalls (12, 22) and/or the tread portion (10) towards at least one of the first circumferential sidewall (12), the second circumferential sidewall (22) or the tread portion (10), the protrusions (14, 24) being provided to contact at least one of an inner face (3, 13, 23) of the first (12) or the second (22) circumferential sidewall or the tread portion (10) of the uninflated tire.

11. A method for inflating an inflatable tire (5) according to any one of claims 1-8, comprising a tread portion (10) and a carcass (9), the tread portion (10) and the carcass (9) delimiting an annular space (6) comprising an inflatable volume (7), the method comprising the steps of mounting an insert (1) for reducing the inflatable volume (7) into the annular space (6), and inflating the tire (5) by injecting a volume of a filling material (8) into the inflatable volume (7) of the annular space (6), **characterised in that** the insert (1) is annularly shaped and **in that** the insert (1) is compressed together in a diametrical direction before insertion into the annular space (6) of the tire (5).

12. A method according to claim 11, **characterised in that** the insert (1) is compressed by pulling it through a tube in a diametrical direction.
